# EUROPEAN PATENT APPLICATION

(11) **EP 4 296 664 A1**
(43) Date of publication of application: **27.12.2023**
(21) Application number: 23178458.8
(22) Date of filing: 09.06.2023
(51) Int. Cl.: G01N 30/24, G01N 30/86, G01N 30/88

(54) **LIQUID CHROMATOGRAPHIC APPARATUS AND METHOD OF CONTROLLING SAME**

(30) Priority: 22.06.2022 JP 2022100660
(71) Applicant: Hitachi High-Tech Science Corporation, Minato-ku Tokyo 105-6411 (JP)
(72) Inventor: KAMATA, Yusuke, Tokyo, 105-6411 (JP); ITO, Masahito, Tokyo, 105-6411 (JP); FUKUDA, Masato, Tokyo, 105-6411 (JP); KOSAI, Takao, Tokyo, 105-6411 (JP); MORISAKI, Atsuki, Tokyo, 105-6411 (JP); MATSUMOTO, Takuya, Tokyo, 105-6411 (JP)
(74) Representative: Stöckeler, Ferdinand

(57) **Abstract**

When performing analysis using a liquid chromatographic apparatus equipped with an autosampler, user convenience is improved. A liquid chromatographic apparatus capable of analyzing a sample using one of multiple methods includes a transportation unit, a setting unit, a storage unit, and a transportation control unit. The transportation unit transports vials containing respective samples to be analyzed and has multiple lanes to which the vials are to be assigned. The setting unit is configured to set one of the multiple methods for each of the multiple lanes. The storage unit stores vial information that associates each of the vials with one of the multiple methods. The transportation control unit controls the transportation unit to distribute each of the vials to a corresponding lane for which the method associated with the vial is set, among the multiple lanes.

## Description

### BACKGROUND OF THE INVENTION

### 1. Field of the Invention

The present invention relates to a liquid chromatographic apparatus and a method of controlling the same.

### 2. Description of the Related Art

Conventionally, liquid chromatography has been used to identify the components of a liquid sample. When sequentially analyzing multiple samples with an analyzer such as a liquid chromatographic apparatus, an autosampler that selects a vial containing a sample solution, draws the sample solution from the vial, and introduces the sample solution into the analyzer is used.

Conventionally, when an autosampler is used for liquid chromatography, the operator needs to intervene in step-by-step procedures. The step-by-step procedures include, for example, injecting samples into vials, placing the vials on a rack, loading the rack on an autosampler, entering information such as the positions of the vials on the rack and analysis conditions into a controller, giving an analysis execution instruction, removing the rack from the autosampler after the completion of analysis, removing the vials from the rack, and separately discarding the samples contained in the vials according to the types of the samples.

Patent Literature 1 discloses a configuration in which an autosampler is informed of a vial to be selected. According to Patent Literature 1, layout components corresponding to sample plates used and vial layout components corresponding to sample types are listed and registered in advance. The operator appropriately selects one of the vial layout components displayed on a display screen and performs graphical motion such as drag and drop operations to create the layout of arrangement of vials for one sample plate. When predetermined manipulations are carried out by the operator after the layout arrangement is determined, the layout is developed according to attribute information associated with the analysis order, and a batch table stating the sample type, sample concentration, and the like of each vial is automatically created.

### [Literature of Related Art]

### Patent Literature

[Patent Literature 1] Japanese Patent Application Publication No. 2015-135240

### SUMMARY OF THE INVENTION

In the method disclosed in Patent Literature 1, after the operator loads the rack on the autosampler, it is necessary to designate the analysis order for multiple vials on the rack using a control device. In other words, since it is necessary to make a setting for analysis of samples contained in vials, the laborious intervention of the operator is required.

In view of the above problems, it is an objective of the present invention to provide a liquid chromatographic apparatus and a control method thereof by which user convenience can be improved in the case where analysis is performed using a liquid chromatographic apparatus equipped with an autosampler.

To solve the above-mentioned problems, the present invention employs a configuration described below. That is, there is provided a liquid chromatographic apparatus capable of performing analysis on samples using multiple methods, the apparatus including: a transportation unit provided with multiple lanes to which vials each containing a sample to be analyzed are to be assigned, the transportation unit being configured to transport the vials; a setting unit configured to set any one of the multiple methods for each of the multiple lanes; a storage unit configured to store vial information that associates each of the vials with one of the multiple methods used for analysis; and a transportation control unit configured to control the transportation unit to distribute each of the vials to a corresponding lane for which the method associated with the vial is set, among the multiple lanes by referring to the vial information.

The present invention has another configuration described below. That is, there is provided a method of controlling a liquid chromatographic apparatus capable of analyzing samples using multiple methods, the apparatus including: a transportation unit configured to transport vials containing respective samples to be analyzed, the transportation unit being provided with multiple lanes to which the vials are to be assigned; and a storage unit configured to store vial information that associates each of the vials with one of the multiple methods, the control method including: setting any one of the multiple methods for each of the multiple lanes; and controlling the transportation unit to distribute each of the vial to a corresponding lane for which the method associated with the vial is set, among the multiple lanes by referring to the vial information.

The present invention improves user convenience when analysis is performed using a liquid chromatographic apparatus equipped with an autosampler.

### BRIEF DESCRIPTION OF THE DRAWINGS

FIG. 1 is a schematic view illustrating a construction example of a liquid chromatographic apparatus according to one embodiment of the present invention. FIG. 2 is a schematic view for describing transportation within an autosampler according to a first embodiment of the present invention.
FIG. 3 is a flowchart illustrating vial transportation operations according to the first embodiment of the present invention.
FIG. 4 is a flowchart for analysis operations according to the first embodiment of the present invention.
FIG. 5A and FIG. 5B are view illustrating a configuration example of each type of information according to the first embodiment of the present invention.
FIG. 6A to FIG. 6H are view for describing vial transportation according to the first embodiment of the present invention.
FIG. 7 is a schematic view for describing transportation within an autosampler according to a second embodiment of the present invention.
FIG. 8 is a flowchart illustrating vial transportation operations according to the second embodiment of the present invention.
FIG. 9 is a flowchart for analysis operations according to the second embodiment of the present invention.
FIG. 10A and FIG. 10B are view illustrating a configuration example of each type of information according to the second embodiment of the present invention.
FIG. 11A to FIG. 11G are view for describing vial transportation according to the second embodiment of the present invention.

### DESCRIPTION OF THE PREFERRED EMBODIMENTS

Hereinafter, embodiments for implementing the present invention will be described with reference to the accompanying drawings. Note that embodiments described below are presented only for illustrative purposes and are not intended to limit the scope of the present invention. In addition, note that not all of the configurations described in each of the embodiments are necessary for achieving the objectives of the present invention. Furthermore, throughout the drawings, like elements are denoted by like reference numerals.

### < First Embodiment >

Hereinafter, a first embodiment of the present invention will be described.

### [Apparatus Construction]

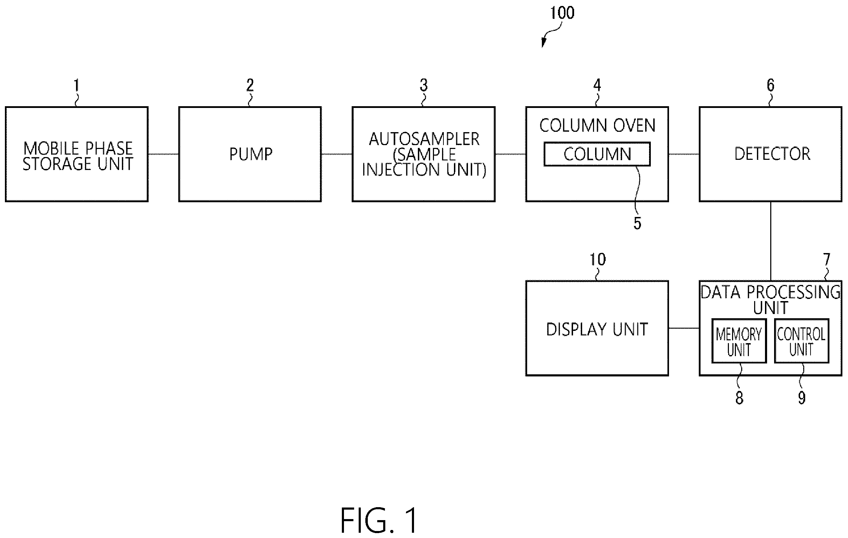

FIG. 1 is a block diagram illustrating a schematic of a liquid chromatographic apparatus 100, which is an automatic measurement system, according to the first embodiment of the present invention. The liquid chromatographic apparatus 100 is an apparatus for qualitatively or quantitatively analyzing a predetermined analytical object. The liquid chromatographic apparatus 100 according to the present embodiment analyzes a sample contained in a vial and provides the analysis results. The liquid chromatographic apparatus 100 includes a mobile phase storage unit 1, a pump 2, an autosampler 3, a column oven 4, a detector 6, a data processing unit 7, and a display unit 10.

The mobile phase storage unit 1 contains mobile phases used for analysis of samples. Each of the mobile phases is a mixed solution of an eluent and a solvent. The liquid chromatographic apparatus 100 according to the present embodiment can perform analysis using multiple methods and contains multiple mobile phases corresponding to the respective methods used for analysis. Since the mobile phases are expendable during the analysis, the mobile phases are appropriately replenished. The pump 2 pumps one mobile phase to be used for analysis, selected from among the multiple mobile phases contained in the mobile phase storage unit 1, into the autosampler 3.

After transporting each of the vials containing the respective samples to be analyzed to a predetermined position, the autosampler 3 draws the sample from the corresponding vial and introduces the withdrawn sample into the mobile phase supplied by the pump 2 so that the sample can be carried, by the mobile phase, to a column 5. The column 5 containing an analyte which is a mixture of the sample and the mobile phase is then placed in the column oven 4. Operations performed in the autosampler 3 will be described below with reference to the drawings.

The column oven 4 enables the column 5 containing the analyte supplied from the autosampler 3 to be maintained at a predetermined temperature. The column 5 serves as a separation unit that separates the components contained in the sample mixed in the analyte from each other. The column 5 may be a packed column or a monolith column. In addition, the filler of the column 5 may be of any one type among an adsorption type, a dispensing type, or an ion exchange type, and the type of filler may be exchanged depending on analysis items. The temperature maintained by the column oven 4 may be arbitrarily set by the operator, or may be predetermined depending on analysis items.

The detector 6 detects the components eluted from the column 5 and outputs signals indicating the detection results. In addition, the construction of the detector 6 may vary depending on the analysis items. As the detector 6, for example, an ultraviolet detector, an ultraviolet visible spectroscopy detector, a diode array detector, a fluorescence detector, a differential refractive index detector, a conductivity detector, or the like may be used. A three-dimensional detector capable of detecting multiple wavelengths simultaneously may also be used.

The data processing unit 7 collects, analyzes, and records the analysis results on the basis of the signals received from the detector 6. The data processing unit 7 includes a memory unit 8 and a control unit 9. The memory unit 8 is configured with a volatile or non-volatile storage device, such as a hard disk drive (HDD), a read only memory (ROM), a random access memory (RAM), or the like. The control unit 9 may be configured with at least one selected from among a central processing unit (CPU), a graphical processing unit (GPU), a micro processing unit (MPU), a digital signal processor (DSP), and a field programmable gate array (FPGA). The control unit 9 reads out and executes various types of programs stored in the memory unit 8, thereby causing the data processing unit 7 to perform various functions.

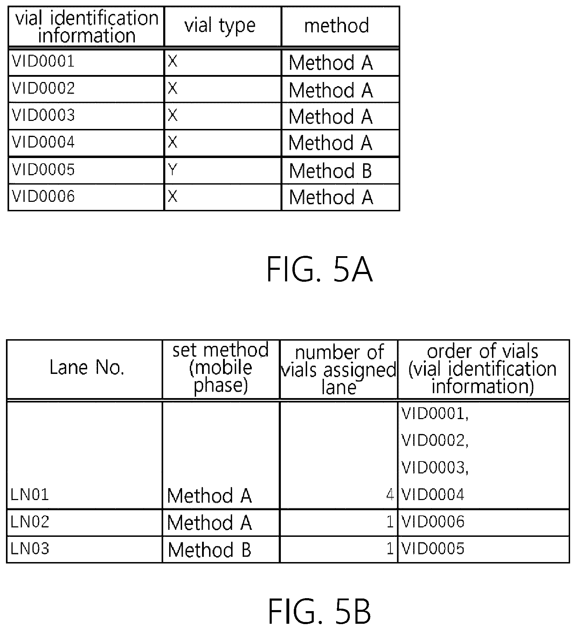

In addition, in the liquid chromatographic apparatus 100, the data processing unit 7 receives setting parameters and various types of information and causes the liquid chromatographic apparatus 100 to operate according to the information. An example of the configuration of various types of information managed by the data processing unit 7 according to the present embodiment will be described with reference to FIG. 5A, FIG. 5B and the like. In the present embodiment, the data processing unit 7 functions as the control unit for controlling each unit of the liquid chromatographic apparatus 100. Alternatively, the control unit for controlling each of the units disposed on the upstream side of the detector 6 and the data processing unit 7 may be provided as separate devices that may operate in conjunction with each other. Here, the data processing unit 7 has the functions of collecting, analyzing, and recording the signals output from the detector 6.

The display unit 10 displays the data processing results generated by the data processing unit 7. The display unit 10 may be an OLED display or the like, or may be a touch panel display combined with a manipulation unit. Although not illustrated in FIG. 1, the data processing unit 7 may further include a communication unit for enabling communication with external devices, a user interface (UI) unit, and so on.

### [Vial Transportation in Autosampler]

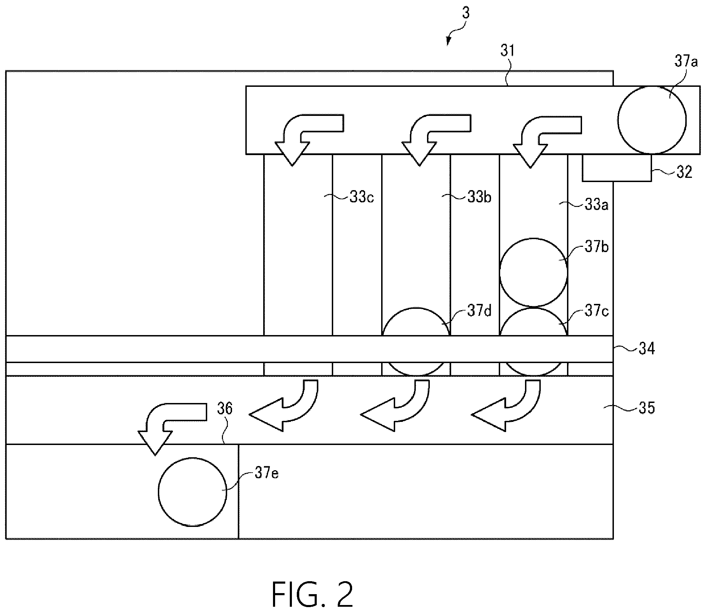

FIG. 2 is a schematic view illustrating an operation in which vials are transported in the autosampler 3 of the liquid chromatographic apparatus 100 according to the present embodiment. Here, when it is necessary to individually describe each of multiple identical elements, the multiple identical elements are designated by identical reference numerals combined with different subscripts (for example, a, b, c, ......), but in the case of collectively describing the multiple identical elements, the elements will be designated by only the reference numeral.

After each of the vials 37 containing the respective samples is placed in a predetermined position by the operator or the like, each of the vials 37 is transported, one after another, toward an input port of the autosampler 3 by an automatic transportation mechanism such as a belt conveyor (not illustrated). Each of the vials may be accompanied by a label (not illustrated) indicating various types of information (hereinafter referred to as "vial information") regarding the vial and/or the contained sample. For example, a barcode, a QR code (registered trademark), or the like may be recorded on the label. The vial information displayed on the label may be recorded in advance on the memory unit 8 of the data processing unit 7.

The autosampler 3 according to the present embodiment is provided with multiple lanes 33. FIG. 2 illustrates an example in which the autosampler 3 is provided with three lanes 33a, 33b, and 33c. When a certain vial of the vials 37 is transported, the vial information displayed on the label attached to the vial 37 is read out by a reader unit 32 installed on a transportation path 31. For example, as illustrated in FIG. 2, the information displayed on the label attached to a vial 37a being transported is obtained in a manner that the reader unit 32 reads out the information on the label. The reader unit 32 may be, for example, a camera, or a reader (for example, a barcode reader) capable of reading a specific code.

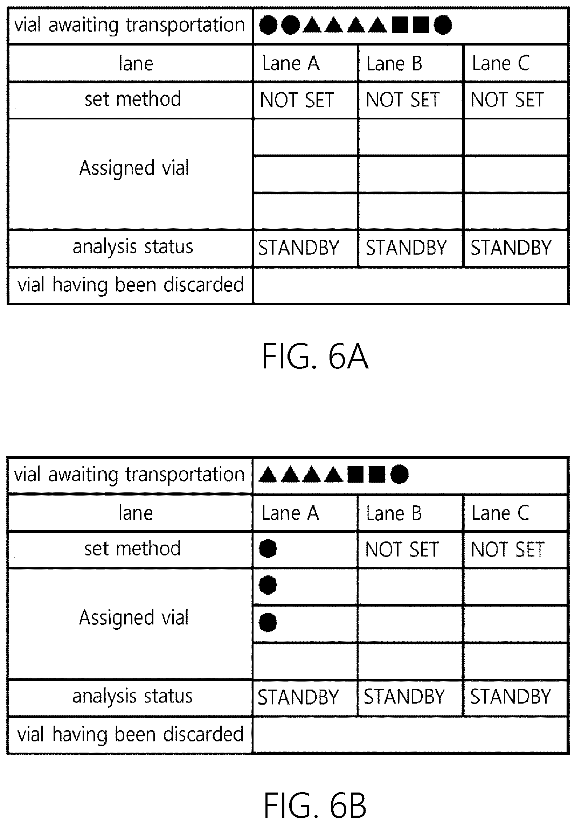

Next, the transported vial 37 is then assigned and transported to any one of the multiple lanes 33 according to the vial information. In the example illustrated in FIG. 2, vials 37b and 37c are assigned to a lane 33a, and a vial 37d is assigned to a lane 33b. Although not illustrated in FIG. 2, flippers or the like for controlling the transportation direction of each of the vials 37 may be provided on transportation paths 31 and 35. In the present embodiment, one of the multiple methods that can be used for analysis in the apparatus is set for each of the multiple lanes 33. Each of the vials 37 is assigned to one lane for which the method associated with the vial is set, among the multiple lanes 33, according to the vial information. The settings of the methods with respect to the respective lanes 33 may be updated as appropriate. Operations for updating the settings will be described in detail with reference to FIG. 6A to FIG. 6H.

An injector 34 is used to draw the samples from the vials 37 assigned to the lanes 33. As having been described above with reference FIG. 1, the drawn sample is injected into a mobile phase corresponding to the designated method, and analysis is carried out by each unit of the apparatus in the subsequent stages. After the sample is withdrawn from the vial 37, the vial is transported to a vial discarding unit 36 through the transportation path 35. In the example illustrated in FIG. 2, a vial 37e having undergone an analysis process is transported to the vial discarding unit 36.

### [Processing Flow]

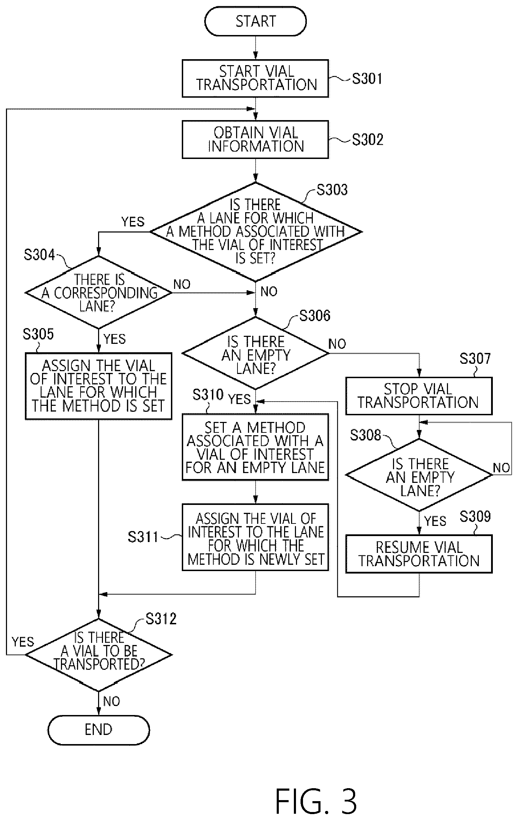

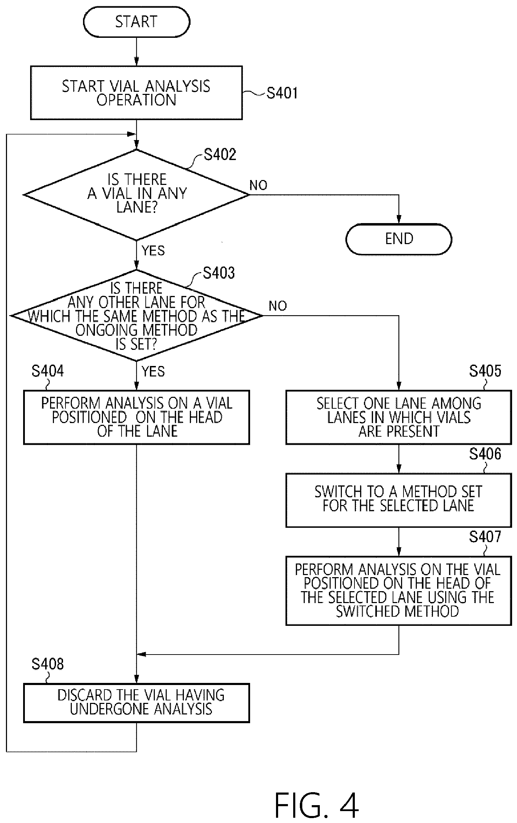

Hereinafter, a processing flow pertaining to the transportation of the vials 37 in the autosampler 3 according to the present embodiment will be described. Here, a front processing stage (FIG. 3) ranging down to the step of assigning the vial 37 to the lane 33 of the autosampler 3 and a rear processing stage (FIG. 4) ranging from the step of analyzing the sample contained in the vial 37 to the step of discarding the vial 37 will be described separately. However, the front processing stage and the rear processing stage can be performed in parallel.

FIG. 5A and FIG. 5B are diagram illustrating an example of the configuration of the vial information managed by the data processing unit 7 and an example of the configuration of the lane information regarding the lanes 33 of the autosampler 3 according to the present embodiment. FIG. 5A) illustrates an example of the configuration of the vial information of the vial 37 transported by the autosampler 3. The vial information includes unique vial identification information for identifying each of the vials 37, a vial type indicating the type of vial, and items to be tested by the method associated with each of the vials 37. The data processing unit 7 can identify the method to be used to analyze the sample contained in the vial 37 by reading out the vial identification information displayed on the label attached to the vial 37.

FIG. 5B illustrates an example of the configuration of the lane information regarding the lanes 33 of the autosampler 3, and illustrates a state in which a running vial 37 being transported is assigned one of the multiple lanes. The lane information includes information such as a lane number for identifying the position of a specific lane, the number of vials currently assigned to the specific lane, and the vial analysis order of a specific vial assigned to the specific lane. The term "set method" refers to a method that is set for a specific lane at a certain point in time, and vials assigned to the specific lane will be analyzed using the set method. The term "number of assigned vials" refers to the number of vials assigned to a specific lane at a certain point in time. The term "upper limit value of the number of assigned vials" may be predetermined according to the dimensions of the lanes, or the upper limit value may vary depending on the dimensions of each vial in the case where the vials differ in size or type. The term "vial analysis order" refers to the order in which the vials assigned to a specific lane will be analyzed, and the vial analysis order can be obtained from the vial identification information shown in FIG. 5A.

### (Transportation Processing)

In connection with the transportation of the vials 37 in the autosampler 3 according to the present invention, FIG. 3 is a flowchart illustrating a flow along which each of the vials 37 is assigned to one of the multiple lanes 33 of the autosampler 3. Th processing may be performed, for example, when the liquid chromatographic apparatus 100 is activated and the vials 37 containing respective samples are placed in a predetermined position. As described above, in the present embodiment, the data processing unit 7 controls the overall operation of the liquid chromatographic apparatus 100, but the processing subject is here described as the autosampler 3.

In S301, the autosampler 3 starts transporting the vials 37 disposed in a predetermined position. In the present embodiment, the vials 37 are transported one by one onto the transportation path 31 illustrated in FIG. 2 by an automatic transportation mechanism (not illustrated).

In S302, the autosampler 3 reads out the information on the label of the vial 37 being transported to the transportation path 31 to obtain the vial information. The detailed information obtained at this time includes at least analysis method (i.e., a mobile phase used for analysis) to be used to analyze the sample contained in the vial 37. Here, the vial 37 of which the vial information is read out is referred to as a vial of interest.

In S303, the autosampler 3 determines whether or not there is a lane 33 for the method corresponding to the vial information of the vial of interest is set. The determination here may be made by referring to the information of the set method included in the lane information shown in FIG. 5B. In the case where the lane 33 satisfying the condition is present (Yes in S303), the processing of the autosampler 3 proceeds to S304. On the other hand, in the case where the lane 33 satisfying the condition is not present (NO in S303), the processing of the autosampler 3 proceeds to S306.

In S304, the autosampler 3 determines whether or not there is room for the vial of interest on the lane 33 for which the method corresponding to the vial information is set. The determination may be made by referring to the number of assigned vials, which is included in the lane information shown in FIG. 5B. In the case where the lane has room for the vial of interest (Yes in S304), the processing of the autosampler 3 proceeds to S305. On the other hand, in the case where the lane does not have room for the vial of interest (NO in S304), the processing of the autosampler 3 proceeds to S306.

In S305, the autosampler 3 assigns the vial of interest to the lane for which the method associated with the vial is set, and transports the vial to the lane. Next, the processing of the autosampler 3 proceeds to S312.

In S306, the autosampler 3 determines whether or not there is an empty lane 33 to which no vials 37 are assigned at that point in time, among the multiple lanes. The determination may be made by referring to the information of the number of assigned vials, which is included in the lane information shown in FIG. 5B. In the case where an empty lane 33 is present (Yes in S306), the processing of the autosampler 3 proceeds to S310. On the other hand, in the case where an empty lane is not present (NO in S306), the processing of the autosampler 3 proceeds to S307.

In S307, the autosampler 3 stops transporting the vials. In this case, a notification that the lane 33 is full and the transportation of the vials 37 is temporarily stopped may be displayed on the display unit 10. Next, the processing of the autosampler 3 proceeds to S308.

In S308, the autosampler 3 determines whether or not an empty lane has occurred after the analysis process is carried out on the vials 37 that have already been assigned to the lane 33. In the case where an empty lane has occurred (YES in S308), the processing of the autosampler 3 proceeds to S309. On the other hand, in the case where an empty lane has not occurred (NO in S308), the autosampler 3 repeats S307 and is on standby for the next operation.

In S309, the autosampler 3 resumes the transportation of the vial of interest and the processing of the autosampler proceeds to S310.

In S310, the autosampler 3 sets the method associated with the vial of interest specified in S302 for an empty lane. In this case, the value of the set method of the lane information regarding the empty lane is updated. Next, the processing of the autosampler 3 proceeds to S311.

In S311, the autosampler 3 assigns the vial of interest to the lane for which the method is designated in S310, and causes the vial to be transported to that lane. Next, the processing of the autosampler 3 proceeds to S312.

In S312, the autosampler 3 determines whether or not there are any vials to be transported. In the case where there are vials to be transported (Yes in S312), the next vial to be transported is regarded as the vial of interest, the processing returns to S302, and the subsequent processes are repeated. On the other hand, in the case where there is no vial to be transported (NO in S312), the processing flow ends. The determination of the presence/absence of the vial to be transported may be carried out by appropriately monitoring the predetermined position at which the vial is to be placed, or the vial transportation may be stopped by the operator's instruction when there is no vial to be transported.

### (Analysis processing)

FIG. 4 is a flowchart illustrating a portion of the vial transportation flow of the autosampler 3 according to the present embodiment, including processing ranging from the step of analyzing the sample contained in each of the vials assigned to each of the lanes 33 to the step of discarding the vials having undergone the analysis. This processing may be started, for example, when the liquid chromatographic apparatus 100 is activated and at least one of the vials 37 containing the respective samples is assigned to one of the multiple lanes 33. As described above, in the present embodiment, the data processing unit 7 controls the overall operation of the liquid chromatographic apparatus 100, but the processing subject is here described as the autosampler 3. This processing flow may be performed in parallel with the processing flow of FIG. 3.

In S401, the autosampler 3 starts analysis operations of the vials. This step includes preparatory operations for analysis, which are performed by the units of the apparatus excluding the autosampler 3. For example, an operation of determining an available mobile phase among the multiple types of mobile phases stored in the mobile phase storage unit 1 may be performed according to the status of consumption of the mobile phases, and an operation of determining an executable method may be performed depending on the determined available mobile phase. In the case where the mobile phase required for analysis is insufficient, an operation of urging the operator to replenish the mobile phase may be performed by displaying a notification on the display unit 10.

In S402, the autosampler 3 determines whether or not there is a lane 33 to which any one of the vials 37 is assigned, among the multiple lanes. The determination may be made by referring to the lane information illustrated in FIG. 5B. In the case where there is a lane to which any one of the vials 37 is assigned (Yes in S402), the processing of the autosampler 3 proceeds to S403. On the other hand, in the case where there is no lane to which any one of the vials 37 is assigned (NO in S402), the processing flow ends. In this case, the processing flow may be performed again according to the progress of the processing illustrated in FIG. 3.

In S403, the autosampler 3 determines whether or not there is a lane for which the same method is set. The determination may be made by referring to the set method included in the lane information shown in FIG. 5B. For example, in the case where the units of the liquid chromatographic apparatus 100 perform the operations of switching from one method to another method, cleaning, replacing, and the like may be performed. Therefore, it is efficient to reduce the number of operations for switching between the methods for analysis and to continue the same method as much as possible. Therefore, the control may be taken such that the current method being executed is continuously performed as much as possible. In the case where there is a lane for which the same method as the current method being executed is set (Yes in S403), the processing of the autosampler 3 proceeds to S404. On the other hand, in the case where there are no other lanes for which the same method as the current method being executed is set (NO in S403), the processing of the autosampler 3 proceeds to S405.

In S404, the autosampler 3 starts analyzing the sample of the vial positioned at the head of the lane corresponding to the current method being executed. For example, the sample is drawn from the vial 37 with the use of the injector 34 and is then injected into the column 5. In this case, the units of the liquid chromatographic apparatus 100 perform the operations associated with analysis. Next, the processing of the autosampler 3 proceeds to S408.

In S405, the autosampler 3 selects one of the multiple lanes to which the vials are assigned. The selection may be made on the basis of, for example, the number of vials assigned to each lane, the priority level of each of the methods, the remaining amount of each of the mobile phases used for the respective methods, additional schedules for analysis, and so on. The priority level of each of the methods may be predetermined on the basis of the execution time or the like. The remaining amount of each of the mobile phases may be determined using, for example, a level sensor (not illustrated) installed in the mobile phase storage unit 1, or the like. The schedules may be manually set by the operator or may be automatically set automatically by the system for more efficient analysis.

In S406, the autosampler 3 performs an operation of switching the current method to another method that is set for the lane which is selected in S405. In this case, the units the liquid chromatographic apparatus 100 perform the operations (for example, cleaning, replacing, etc.) for switching between the methods. At the completion of the switching between the methods, the processing of the autosampler 3 proceeds to S407.

In S407, the autosampler 3 starts analyzing the sample of the vial positioned at the head of the lane selected in S405, using the newly set method. In this case, the units of the liquid chromatographic apparatus 100 perform the operations associated with analysis. Next, the processing of the autosampler 3 proceeds to S408.

In S408, the autosampler 3 transports the vial 37 having undergone the analysis to the vial discharging unit 36 through the transportation path 35. The processing then returns to S402, and the autosampler 3 repeats the subsequent steps.

### (Transportation Example)

An example of vial transportation of the autosampler 3 will be described with reference to FIG. 6A to FIG. 6H. Here, an example is taken in which the liquid chromatographic apparatus 100 can perform analysis using three methods (for example, Method A, Method B, and Method C). In FIG. 6A to FIG. 6H, the three methods are designated by Method A (a black circle (●)), Method B (a black triangle (▲)), and Method C (a black square (■)), respectively. For the purpose of each of description, vials and methods associated with the respective vials will be denoted by the same reference numerals. The autosampler 3 is assumed to have three lanes (Lane A, Lane B, and Lane C). In addition, the upper limit value of the number of vials that can be assigned to each lane is assumed to be 3.

FIG. 6A illustrates an example in which 10 vials are waiting their turn to be transported. Here, it is assumed that each vial referred to as "vial awaiting transportation" is transported one by one, from the left to the input port of the autosampler 3. In this state, none of the methods is set for each of the three lanes, and the liquid chromatograph apparatus 100 is on standby for analysis/measurement operations. Here, each lane and the vial discarding unit 36 are empty.

At the beginning of the processing flow illustrated in FIG. 3, as illustrated in FIG. 6B, a method (herein, Method A denoted by a black circle (●)) associated with the leading vial is set for an empty lane (Lane A in the present example). Then, vials (two vials in the present example) designated by Method A are assigned to Lane A, and the vials are then sequentially transported to Lane A.

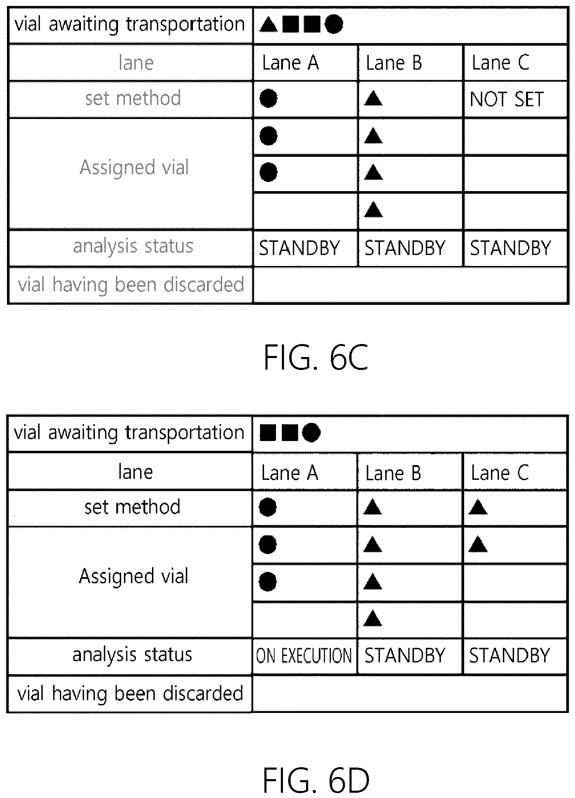

Next, as illustrated in FIG. 6C, since a vial associated with a different method (Method B denoted by a black triangle (A) in the present example) from that of the preceding vials appears, Method B is set for the empty lane (Lane B in the present example). Next, vials designated by Method B are transported to Lane B. Here, although there are four consecutive vials designated by Method B, since the upper limit value of the number of vials that can be assigned to one lane is 3, the three of the four consecutive vials are sequentially assigned and transported to Lane B.

Subsequently, as illustrated in FIG. 6D, since there is an empty lane (here, Lane C), the last vial of the four consecutive vials designated by Method B is assigned and transported to Lane C. In this case, Method B is set for Land C.

The selected vial among the vials awaiting transportation is the vial designated by Method C (a black square (■)), but there is no empty lane. Therefore, in this case, the transportation of the vial is temporarily stopped. On the other hand, the analysis processing for the vials assigned to each lane is carried out as appropriate. As illustrated in FIG. 6D, a case where analysis operations using Method A are performed on the vial assigned to Lane A will be described.

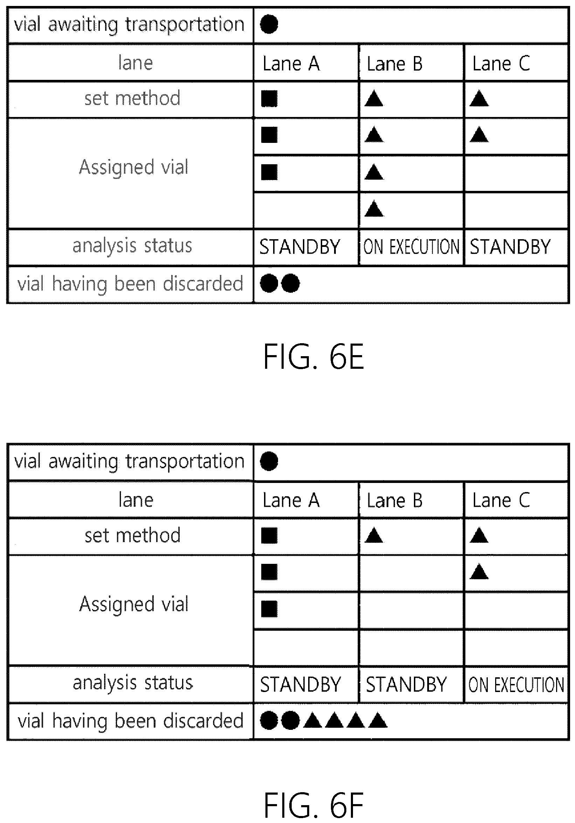

As illustrated in FIG. 6E, after the analysis operations using Method A are performed on the vials assigned to Lane A, the vials in Lane A are transported to the vial discarding unit 36 so as to be discarded. As a result, Lane A becomes empty, and the vials awaiting transportation (herein two vials), designated by Method C (herein, two vials), are assigned and transported to Lane A. In this case, Method C is set for Lane A. In parallel with this operation, analysis operations using Method B may be performed on the vials assigned to Lane B. The last vial awaiting transportation is a vial designated by Method A (a black circle (●)), but there is no lane for which Method A is set at this point in time. Therefore, in this case, the vial transportation is temporarily stopped.

As illustrated in FIG. 6F, after analysis operations are performed on all of the vials designated by Method B and assigned to Lane B are carried out, analysis operations using Method B are then performed on the vials positioned in Lane C for which Method B which is the same as the current method being executed is set. In addition, since Lane B becomes empty, the last vial (vial designated by Method A) awaiting transportation is assigned and transported to Lane B. In this case, Method A is set for Lane B.

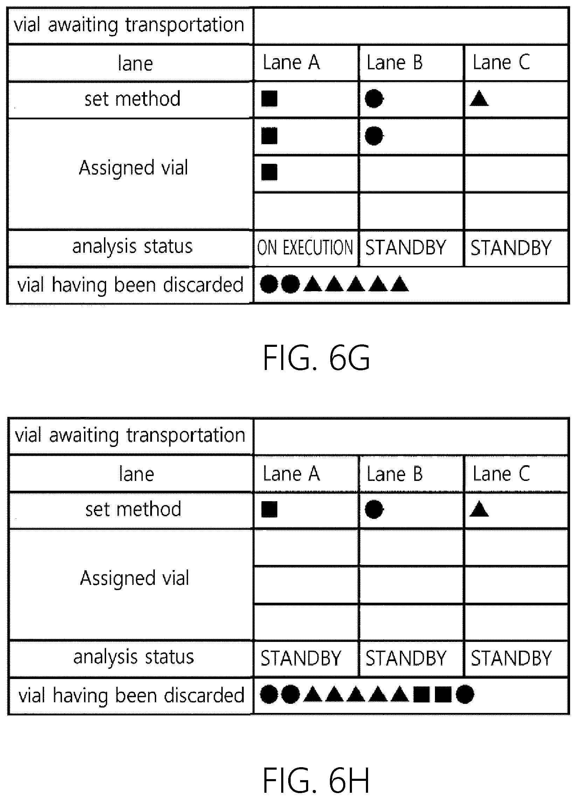

As illustrated in FIG. 6G, after analysis and measurement operations are performed on all of the vials designated by Method B and assigned to Lane C, any one of the lanes still having the remaining vials is selected. Herein, an example in which Lane A is selected is described.

Then, when the analysis operations for the vials disposed in each lane are completed, the apparatus enters the state illustrated in FIG. 6H.

As described above, according to the present embodiment, in the liquid chromatographic apparatus being capable of performing analysis using multiple methods, the analysis can be efficiently carried out without an operator's intervention of individually designating the measurement order, installation position, and so on for the vials containing the samples. Furthermore, only with an easy work in which the operator simply places the vials in a predetermined position, the vials can be automatically transported and analyzed one by one in the desired order. For example, the labor for placing the vials on a rack and loading the rack in the autosampler can be simplified.

### < Second Embodiment >

Hereinafter, a second embodiment of the present invention will be described. Note that the embodiment has a configuration in which the autosampler 3 has multiple lanes 33 which are equally treated in priority. In the present embodiment, the control is performed such that a lane among multiple lanes is set as a priority lane, and a sample having a higher priority, i.e., a sample that needs to be analyzed earlier is assigned to the priority lane so that the sample with a high priority can be analyzed earlier. Note that the same details as in the first embodiment will not be redundantly described here in describing the second embodiment, and a description of the second embodiment will be focused on the differences from the first embodiment. The outline of the apparatus according to the present embodiment is the same as that illustrated in FIG. 1.

### [Vial Transportation in Autosampler]

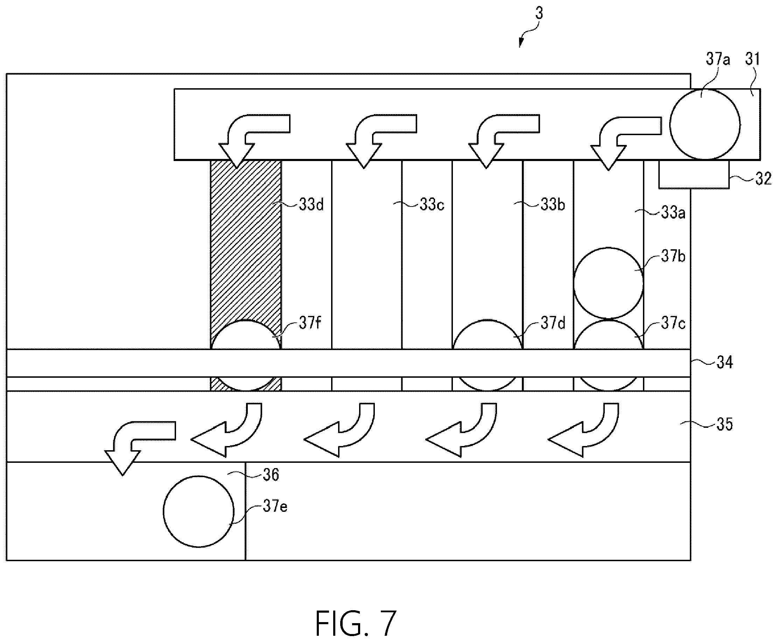

FIG. 7 is a schematic view illustrating an operation in which an autosampler 3 of a liquid chromatographic apparatus 100 according to the present embodiment transports vials. The configuration of the present embodiment differs from the configuration of the first embodiment illustrated in FIG. 2 in the point that there are a total of four lanes 33 and one lane 33d of the four lanes 33 is set as a priority lane. A vial 37f is assigned to the priority lane 33d.

### [Processing Flow]

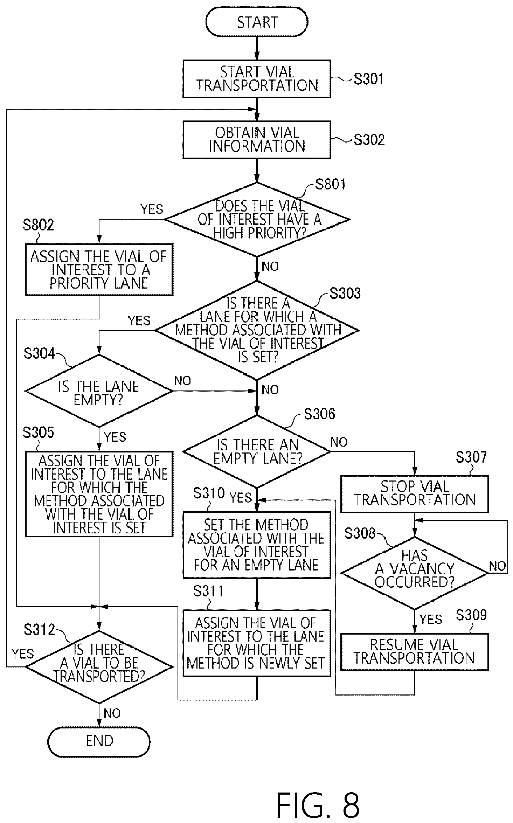

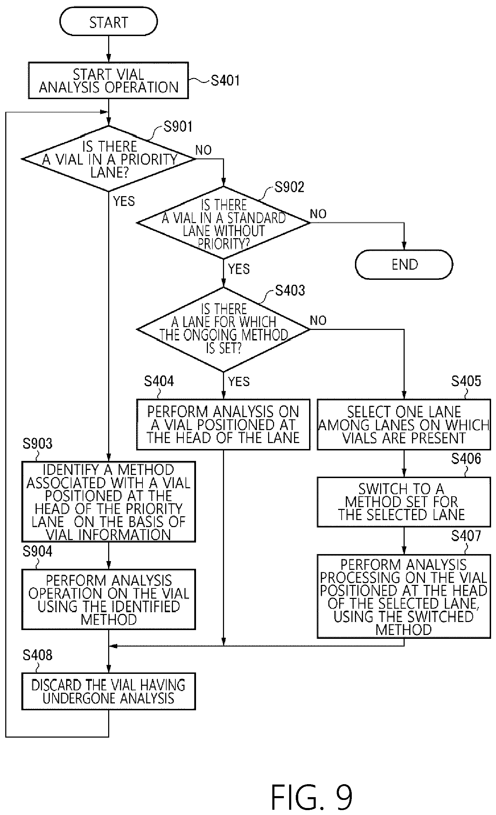

Hereinafter, a processing flow pertaining to the transportation of the vials 37 in the autosampler 3 according to the present embodiment will be described. Here, like in the first embodiment, a front processing stage (FIG. 8) ranting down to the step of assigning the vials 37 to the lanes 33 of the autosampler 3 and a rear processing stage (FIG. 9) ranging from the step of analyzing the samples contained in the vials 37 to the step of discarding the vials 37 will be described separately. However, note that the front processing stage and the rear processing stage can be executed in parallel.

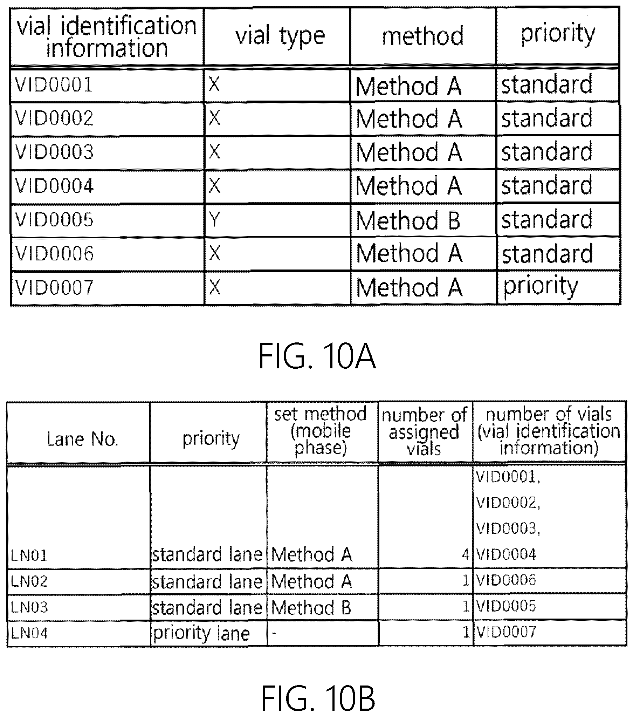

FIG. 10A and FIG. 10B are diagram illustrating an example of the configuration of vial information managed by the data processing unit 7 and an example of the configuration of lane information regarding the lanes 33 of the autosampler 3 according to the present embodiment. FIG. 10A illustrates an example of the configuration of vial information regarding the vials 37 transported by the autosampler 3. A difference from the configuration of FIG. 5A is that information indicating the priority level of each vial is added. Herein, an example in which there are two priority levels, "standard" representing a low priority and "priority" representing a high priority, will be described.

FIG. 10B illustrates an example of the configuration of lane information regarding the lanes 33 of the autosampler 3. A difference from FIG. 10B is that a lane with the lane number "LN04", which is a priority lane, is added.

### (Transportation Processing)

In connection with the transportation of the vials 37 in the autosampler 3 according to the present invention, FIG. 8 is a flowchart illustrating a flow along which the vials 37 are assigned to the lanes 33 of the autosampler 3. This process may be performed, for example, when the liquid chromatographic apparatus 100 is activated and the vials 37 containing respective samples are placed in a predetermined position. As described above, in the present embodiment, the data processing unit 7 controls the overall operation of the liquid chromatographic apparatus 100, but the processing subject is here described as the autosampler 3. The same steps as in the first embodiment illustrated in FIG. 3 will be described with the same reference numerals.

The processing of the autosampler 3 proceeds to S801 after the completion of the process of S302. In S801, the autosampler 3 determines whether or not the priority level of a vial of interest is set to "priority". The determination here may be made by referring to the priority item of the vial information illustrated in FIG. 10A. In the case where the vial of interest has a high priority (YES in S801), the processing of the autosampler 3 proceeds to S802. On the other hand, in the case where the vial of interest does not have a high priority (NO in S801), the processing of the autosampler 3 proceeds to S303.

In S802, the autosampler 3 assigns and transports the vial of interest to the priority lane. Next, the processing of the autosampler 3 proceeds to S312. In the case where the vial of interest cannot be transported because the priority lane is full, the transportation of the vial of interest may be stopped until a vacancy occurs in the priority lane.

### (Analysis Processing)

FIG. 9 is a flowchart illustrating a portion of the vial transportation flow of the autosampler 3 according to the present embodiment, ranging from the step of analyzing the samples contained the respective vials assigned to the lanes 33 to the step of discarding the vials having undergone the analysis. This processing may be performed, for example, when the liquid chromatographic apparatus 100 is activated and at least one of the vials 37 containing the respective samples is assigned to one of the lanes 33. As described above, in the present embodiment, the data processing unit 7 controls the overall operation of the liquid chromatographic apparatus 100, but the processing subject is here described as the autosampler 3. This processing flow may be executed concurrently with the processing flow of FIG. 9. The same steps as in the first embodiment illustrated in FIG. 4 will be described with the same reference numerals.

The processing of the autosampler 3 proceeds to S901 after the completion of the process of S401. In S901, the autosampler 3 determines whether or not there are vials placed in the priority lane. The determination here may be made by referring to the lane information illustrated in FIG. 10B. In the case where there are vials placed in the priority lane (Yes in S901), the processing of the autosampler 3 proceeds to S903. On the other hand, in the case where there are no vials in the priority lane (NO in S901), the processing of the autosampler 3 proceeds to S902.

In S902, the autosampler 3 determines whether or not there are vials in at least one lane other than the priority lane. The determination here may be made by referring to the lane information illustrated in FIG. 10B. In the case where there are vials in at least one lane other than the priority lane (Yes in S902), the processing of the autosampler 3 proceeds to S403. On the other hand, in the case where there are no vials in at least one lane other than the priority lane (NO in S902), this processing flow ends. In this case, a configuration in which the processing flow is started again according to the progress of the processing illustrated in FIG. 10A and FIG. 10Bmay be considered.

In S903, with respect to the vial positioned at the head of the priory lane, the autosampler 3 identifies the designated method for the vial by referring to the vial information. The designated method may be identified on the basis of the vial information of FIG. 10A and the lane information of FIG. 10B.

In S904, the autosampler 3 performs an operation of switching the current method to the method that is newly identified in S903. In this case, the units of the liquid chromatographic apparatus 100 perform their operations (for example, cleaning, replacing, etc.) for switching between the methods. In addition, after the completion of the operations for switching between the methods, the autosampler 3 performs analysis processing on the vial positioned at the head of the priority lane, using the newly set method. In this case, the units of the liquid chromatographic apparatus 100 performs their operations associated with analysis. Next, the processing of the autosampler 3 proceeds to S408.

### (Transportation Example)

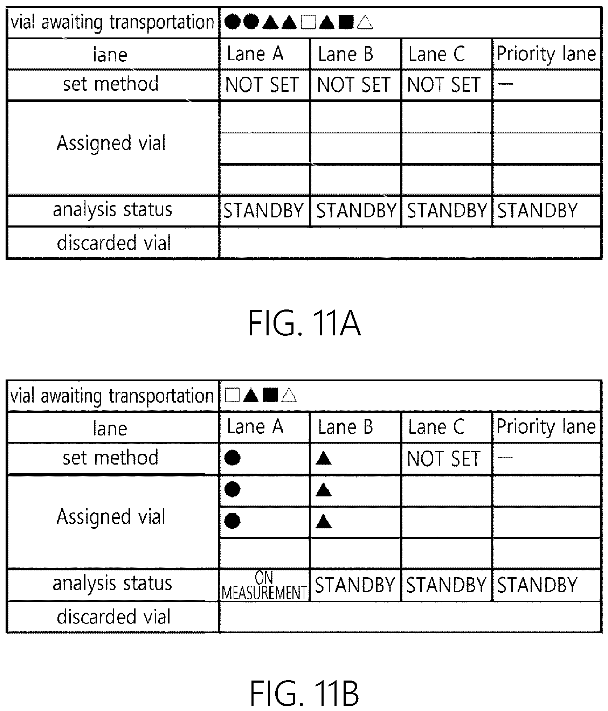

An example in which the autosampler 3 according to the present embodiment transports vials 37 will be described with reference to FIG. 11A to FIG. 11G. Here, an example in which the liquid chromatographic apparatus 100 can perform analysis using three methods (for example, Method A, Method B, and Method C) will be described. In FIG. 11A to FIG. 11G, the three methods are referred to as Method A (a black circle (●)), Method B (a black triangle (▲), a white triangle (△), and Method C (a black square (■), a white square (□)), respectively. Here, the vials represented by the white triangles (△) and the white squares (□) are assumed to have a high priority ("priority"), and the other vials are assumed to have a low priority ("standard"). The autosampler 3 is assumed to have three standard lanes (Lane A, Lane B, and Lane C) and one priority lane. In addition, the upper limit value of the number of vials that can be assigned to one lane is assumed to be 3.

FIG. 11A illustrates an example in which 8 vials are on standby to be transported. Here, it is assumed that each vial referred to as "vial awaiting transportation" is transported one by one from the left to the input port of the autosampler 3. In this state, no method is set for each of the three standard lanes, and the liquid chromatographic apparatus 100 is assumed to be on standby to perform analysis and measurement operations. Each lane and the vial discarding unit 36 are in an empty state.

When the processing flow illustrated in FIG. 8 is started, as illustrated in FIG. 11B, a method (herein, Method A denoted by a block circle (●)) associated with the leading vial is set for an empty lane (Lane A in the present example). Then, vials (herein two vials) associated with Method A are assigned and transported to Lane A. Next, Method B is set for an empty lane (Lane B in the present example). Then, vials (herein two vials) associated with Method B are assigned and transported to Lane B. In parallel with the operation, analysis operations using Method A are performed on the vials assigned to Lane A.

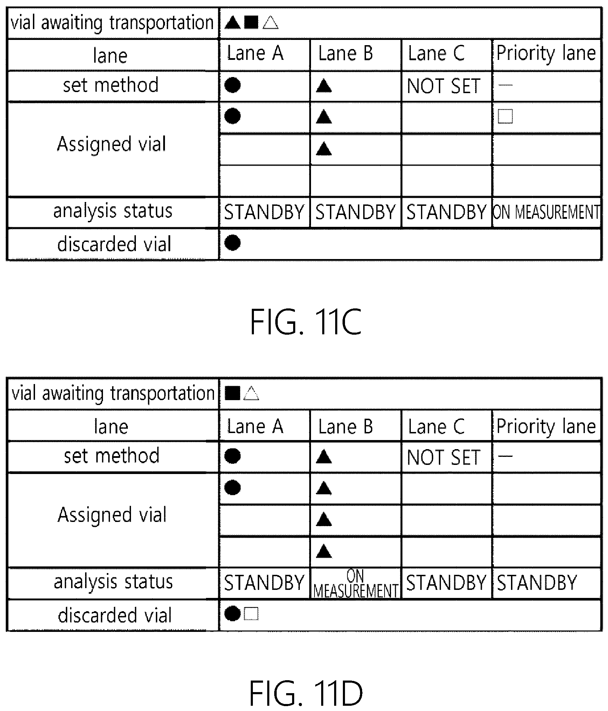

The next vial awaiting transportation is a vial having a high priority and is set to be analyzed by Method C. Accordingly, as illustrated in FIG. 11C, this vial is assigned and transported to the priority lane. Here, since the vial is assigned to the priority lane, the analysis for each of the vials assigned to Lane A is interrupted, and analysis for the vial in the priority lane is preferentially carried out. In the case where the current method being executed differs from the method set for the vial disposed in the priority lane, operations for switching between the methods are performed. In the present embodiment, the operations for switching between the methods are carried out after the completion of the analysis of the current vial. However, alternatively, the analysis of the current vial may be interrupted, and the operations for switching between the methods may be preferentially performed. One of these two options may be selected depending on the estimated remaining analysis time for the current vial on which the analysis is being performed.

As illustrated in FIG. 11D, after the analysis of the vial disposed in the priority lane is completed, one of the lanes to which vials are assigned is selected, and the analysis operations for the vials disposed in the selected lane are performed. Here, it is assumed that Lane B for which Method B is set is selected, and the analysis processing is resumed on the vials disposed in Lane B.

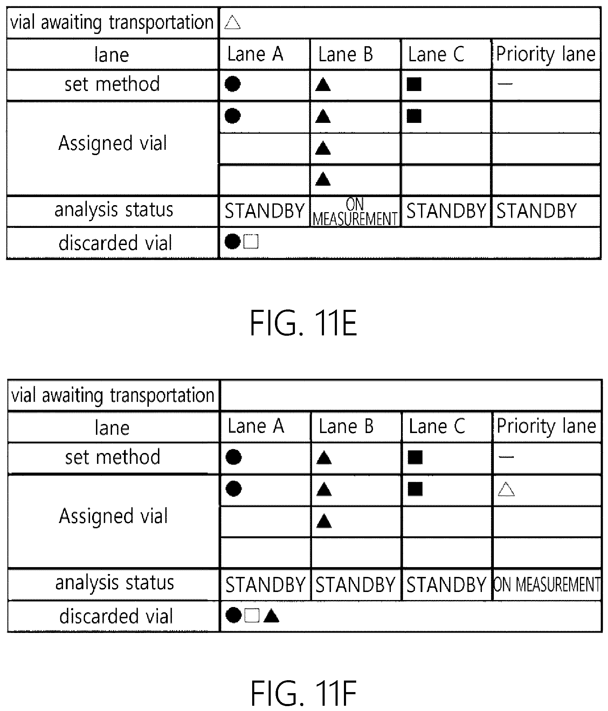

The next vial awaiting transportation is a vial having a low priority ("standard") and set to be analyzed by Method C. Accordingly, as illustrated in FIG. 11E, Method C is set for Lane C, which is an empty lane, and the vial is assigned and transported to Lane C.

In addition, the next vial awaiting transportation is a vial having a high priority ("priority") and set to be analyzed by Method B. Accordingly, as illustrated in in FIG. 11F, this vial is assigned and transported to the priority lane. Here, since the vial is assigned to the priority lane, the analysis for each of the vials assigned to Lane B is interrupted, and analysis for the vial in the priority lane is preferentially carried out. In this case, since the current method being executed differs from the method set for the vial disposed in the priority lane, operations for switching from the current method to the method set for the vial disposed in the priority lane are carried out.

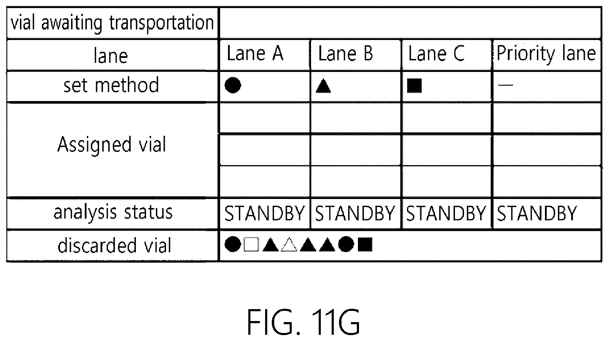

Next, the analysis of the vials in each lane proceeds according to the priority order, resulting in the state illustrated in FIG. 11G, and then the analysis is completed.

As described above, the present embodiment not only exhibits the same advantages provided by the first embodiment but also has an advantage of performing a control operation in which the analysis of vials with a low priority can be interrupted, and the analysis of vials with a high priority can be preferentially performed. Accordingly, the analysis order of the vials can be changed by the operator as intended, and thus user convenience can be improved.

### <Other Embodiments>

In the embodiments described above, the vials having undergone analysis processing are sequentially transported to the vial discarding unit 36. Here, the vial discarding unit 36 may be provided with multiple regions. Therefore, the vials having undergone analysis may be discarded in a distributed manner to the multiple regions, depending the type of method used for the vial, the type of vial (for example, dimensions), the type of sample contained in the vial, and so on. A configuration may be employed in which the number of vials discarded into the vial discarding unit 36 is monitored, the pathway to each of the multiple regions can be changed depending on the number of the vials. In this case, the operator may be notified of the results of the operations.

Although the second embodiment is configured such that only one priority lane is provided, there may be multiple priority lanes with different priority levels. In this case, for example, three or more priority lanes having respectively different priority levels may be provided. In this case, the waiting time for analysis of vials with a higher priority can be reduced, and thus user convenience for analysis can be improved.

Alternatively, the liquid chromatographic apparatus 100 can concurrently perform different methods for analysis. For example, the liquid chromatographic apparatus 100 can be configured to have multiple channel systems each having a column 5, and the channel systems can perform analysis operations using respectively different methods. In this case, the multiple lanes of the autosampler 3 are configured to correspond to the respective channel systems. Hereinafter, an example in which amino acid analysis, hemoglobin HbAlC analysis, and food analysis are performed with the liquid chromatographic apparatus 109 will be described. In the example, two methods, Method A and Method B, can be executed in parallel, and the apparatus has two branched lanes respectively corresponding to the two methods. In addition, the advantages of the configuration according to the present invention will be described.

For example, in the case of performing amino acid analysis, it is useful that protein hydrolysate analysis (PH method) is referred to as Method A and biological fluid analysis (PF method) is referred to as Method B. The methods differ in mobile phase. In other words, the PH method and the PF method use a sodium citrate-based mobile phase and a lithium citrate-based mobile phase, respectively. In this case, since vials to be analyzed by the PH method are transported to Lane A and vials to be analyzed by the PF method are transported to Lane B, the time for exchanging between the mobile phase for Method A and the mobile phase for Method B can be eliminated as compared to the case where Method A and Method B are performed using a single channel system. As a result, it is possible to quickly and efficiently perform analysis using the PH and PF methods. As described above, the present invention can be applied to the case where different mobile phases are used for respective methods.

For example, in the case of performing hemoglobin HbAlC analysis, it is useful that a high-performance method is referred to as Method A and a high-resolution method is referred to as Method B, respectively. The methods are classified according to the length of the column. For example, a 35-mm column is used for the high-performance method and an 80-mm column is used for the high-resolution method. In this case, a channel system equipped with a high-performance column and a channel system equipped with a high-resolution column are equilibrated in advance, and vials are transported to each of the channel systems so that analysis operations can be rapidly carried out. As described above, the present invention can be applied to the case where multiple columns are used for respectively different methods.

For example, in the case of food analysis, it is useful that a separation method dedicated to catechin analysis is designated as Method A and a separation method for analyzing general polyphenols such as chlorogenic acid is designated as Method B. Method A uses a phenyl column as the column 5 and a mass spectrometer as the detector 6. On the other hand, Method B uses a C18 reverse phase chromatography column as the column 5 and a UV detector as the detector 6. As described above, the present invention can be applied to the case where different types of detectors are used for the respective methods.

When performing analysis using the liquid chromatographic apparatus in which multiple methods can be concurrently performed, the correspondence between lanes and methods may be determined depending on the processing times for the respective methods and the characteristics of the methods during analysis scheduling or may be arbitrarily set by the operator. The correspondence relationship may be changed at a certain point in time according to the state of the liquid chromatographic apparatus.

The present invention can be implemented in a manner that a program or an application program for realizing the functions of the one or more embodiments described above is transferred to a system or apparatus through a network or via a storage medium, and one or more processors in the computer of the system or apparatus read and execute the program or the application program in the system or apparatus.

Alternatively, the present invention may be implemented in the form of a circuit configured to perform one or more functions. Examples of the circuit for perform one or more functions include application specific integrated circuits (ASICs), field programmable gate arrays (FPGAs), etc.

As described above, the following matters are disclosed herein.
(1) A liquid chromatographic apparatus (for example, refer to reference numeral 100) capable of analyzing a sample using one of multiple methods, the apparatus including: a transportation unit (for example, refer to reference numeral 3) configured to transport vials (for example, refer to reference numeral 37) containing respective samples to be analyzed, the transportation unit being provided with multiple lanes (for example, refer to reference numeral 33) to which the vials are to be assigned; a setting unit (for example, refer to reference numerals 7 and 9) configured to set any one of the multiple methods for each of the multiple lanes; a storage unit (for example, refer to reference numerals 7 and 8) configured to store vial information that associates each of the multiple vial with one of the multiple methods; a transportation control unit (for example, refer to reference numerals 7 and 9) configured to control the transportation unit to distribute each of the vials to one lane for which a method associated with the vial, among the multiple methods, is set, among the multiple lanes, by referring to the vial information. According to the invention, it is possible to improve user convenience when analysis is performed using a liquid chromatographic apparatus equipped with an autosampler.
(2) The liquid chromatography apparatus according to item (1), in which the setting unit updates settings of the methods with respect to the respective lanes, according to whether each of the multiple lanes is empty or full and to a method associated with a newly arriving vial of the vials, among the methods.
   According to the method, it is possible to change settings of the multiple lanes according to the transportation status of the vials, thereby enabling efficient vial transportation and analysis.
(3) The liquid chromatographic apparatus according to item (1), in which among the multiple lanes, when there is no lane for which a method associated with a newly arriving vial is set, and there is no empty lane, the transportation control unit temporarily stops transporting the newly arriving vial.
   According to the invention, it possible to automatically control the transportation of the vials according to whether each of the lanes is empty or full.
(4) The liquid chromatography apparatus according to item (1), in which the multiple lanes include a priority lane (for example, refer to reference numeral 33d) having a high priority, the vial information includes information regarding a priority level for analysis, and the transportation control unit assigns a vial having a high priority for analysis to the priority lane.
   According to the method, it is possible to appropriately change the analysis order of samples according to the priority level.

The liquid chromatographic apparatus according to item (4), further including an analysis unit (for example, refer to reference numerals 3, 4, 6, and 7) configured to sequentially analyze vials assigned to each of the multiple lanes, in which when a certain vial among the vials is assigned to the priority lane, the analysis unit preferentially performs analysis on the vial using the method associated with the vial.

According to the invention, it is possible to perform control such that the analysis order of samples is appropriately changed according to the priority level.
(6) The liquid chromatographic apparatus according to item (5), further including multiple discarding units (for example, refer to reference numeral 36) for discarding the vials, in which the transportation control unit causes the vials analyzed by the analysis unit to be transported to the multiple discarding units according to the vial information.

According to the invention, it possible to discard the vials in a sorted and distributed manner according to the vial information. In addition, it is possible to reduce a user's labor for a finishing operation, resulting in improvement in user convenience.
(7) A control method for a liquid chromatographic apparatus (for example, refer to reference numeral 100) capable of analyzing a sample using one of multiple analysis methods, the apparatus including: a transportation unit configured to transport vials (for example, refer to reference numeral 37) containing respective samples to be analyzed and has multiple lanes (for example, refer to reference numeral 33) to which the vials are to be assigned; and a storage unit (for example, refer to reference numeral 8) configured to store vial information that associates each of the vials with one of the multiple methods, the control method including: setting one of the multiple methods for each of the multiple lanes; and controlling the transportation unit to distribute each of the vials to a corresponding one for which the method associated with the vial is set, among the multiple lanes, according to the vial information

According to this item, it is possible to improve user convenience when analysis is performed using a liquid chromatographic apparatus equipped with an autosampler.

In addition, the present invention is not limited to the embodiments described above but can be suitably modified, improved, or the like. In addition, the material, shape, dimension, numerical value, form, number, arranged position, etc. of each of the constitutional element according to the embodiments described above are optional and are not particularly limited as long as the objectives of the inventions can be achieved.

### [List of Reference Numerals]

- 1:: mobile phase storage unit
- 2:: pump
- 3:: autosampler
- 4:: column oven
- 5:: column
- 6:: detector
- 7:: data processing unit
- 8:: memory unit
- 9:: control unit
- 10:: display unit
- 31, 35:: transportation path
- 32:: reader unit
- 33:: lane
- 34:: injector
- 36:: vial discarding unit
- 37:: vial
- 100:: liquid chromatographic apparatus

## Claims

1. A liquid chromatographic apparatus (100) capable of analyzing a sample using any one of multiple methods, **characterized in that** the liquid chromatographic apparatus (100) comprises:
a transportation unit (3) configured to transport each of vials (37) containing a sample to be analyzed, the transportation unit (3) being provided with multiple lanes (33) to which the vials (37) are to be assigned;
a setting unit (7) configured to set any one of the multiple methods for each of the multiple lanes (33);
a storage unit (8) configured to store vial information that associates one of the multiple methods with each of the vials (37); and
a transportation control unit (9) configured to control the transportation unit (3) to assign each of the vials (37) to a corresponding lane for which the method designated for the vial is set, among the multiple lanes (33), by referring to the vial information.

2. The liquid chromatography apparatus (100) of claim 1, wherein the setting unit (7) updates a setting of each of the multiple lanes (33) for which one of the multiple methods is set according to whether each of the multiple lanes (33) is empty or full and according to a method designated for a newly arriving vial.

3. The liquid chromatographic apparatus (100) of claim 1, wherein, among the multiple lanes (33), when there is no lane for which a method designated for a newly arriving vial is set and there is no empty lane, the transportation control unit (9) temporarily stops transporting the newly arriving vial.

4. The liquid chromatographic apparatus (100) of claim 1, wherein the multiple lanes (33) include a priority lane (33d) with a high priority;
the vial information includes information regarding a priority level for analysis; and
the transport control unit (9) assigns vials (37) having a high priority level to the priority lane (33d).

5. The liquid chromatographic apparatus (100) of claim 4, further comprising an analysis unit configured to sequentially analyze the vials (37) assigned to each of the multiple lanes (33),
Wherein, when a certain vial is assigned to the priority lane (33d), the analysis unit preferentially performs analysis on the vial assigned to the priority lane (33d) by switching a current method being executed to a method designated for the vial assigned to the priority lane (33d).

6. The liquid chromatographic apparatus (100) of claim 5, further comprising multiple discarding units (36) used to discard the vials (37), wherein the transportation control unit (9) causes the vials (37) analyzed by the analysis unit to be transported to the multiple discarding units (36) according to the vial information.

7. A control method for a liquid chromatographic apparatus (100) capable of analyzing a sample using any one of multiple methods, **characterized in that** the liquid chromatographic apparatus (100) comprises a transportation unit (3) configured to transport each of vials (37) containing a sample to be analyzed, the transportation unit (3) being provided with multiple lanes (33) to which the vials (37) are to be assigned; and a storage unit (8) configured to store vial information that associates one of the multiple methods with each of the vials (37), and
the control method comprises: setting one of the methods for each of the multiple lanes (33); and controlling the transportation unit (3) to assign each of the vials (37) to a corresponding lane for which the method associated with the vials (37) is set, among the multiple lanes (33), by referring to the vial information.
